# DEMANDE DE BREVET EUROPEEN

(11) **EP 0 780 587 A1**
(43) Date de publication de la demande: **25.06.1997**
(21) Numéro de dépôt: 96402649.6
(22) Date de dépôt: 06.12.1996
(51) Int. Cl.: F16C 39/06

(54) **Palier magnétique à actionneurs et capteurs alternés**

(30) Priorité: 18.12.1995 FR 9514965
(71) Demandeur: AEROSPATIALE Société Nationale Industrielle, 75781 Paris Cédex 16 (FR)
(72) Inventeur: Bernus, Christophe, 75018 Paris (FR); Jamain, Patrice, 78580 Maule (FR); Roland, Jean-Pierre, 95510 Vienne en Arthies (FR)
(74) Mandataire: Rinuy, Santarelli

(57) **Abrégé**

Un palier magnétique pour le centrage magnétique d'un rotor par rapport à un stator selon deux axes radiaux de centrage comporte des actionneurs agissant selon des axes de centrage et des capteurs de vitesse ayant des axes de détection coplanaires avec les axes de centrage. Le rotor comporte une couronne contribuant à déterminer à la fois les entrefers des actionneurs et les entrefers des capteurs.

## Description

L'invention concerne un palier magnétique pour le centrage magnétiquement actif, selon au moins deux axes radiaux de centrage, d'un second corps en rotation relative par rapport à un premier corps autour d'un axe. On dit couramment du second corps qu'il est suspendu grâce au palier.

De tels paliers sont notamment décrits dans les documents US-A-4.211.452 (POUBEAU), US-A-4.470.644 (WEISSER) et US-A-4.918.345 (VAILLANT DE GUELIS, ROLAND, JAMAIN).

Ainsi qu'on le sait, il n'est pas possible de centrer magnétiquement, de façon complètement passive, un corps en mouvement selon trois axes par rapport à un autre : il est toujours nécessaire de prévoir, pour au moins un axe, un centrage magnétiquement actif. Il est rappelé ici qu'un centrage magnétiquement passif est un centrage exclusivement effectué par des aimants permanents, tandis qu'un centrage magnétiquement actif implique l'utilisation d'un actionneur magnétique comportant un bobinage dans lequel on fait circuler un courant variable approprié.

De tels paliers sont naturellement stables suivant un certain nombre d'axes de liberté (raideur positive, similaire à celle d'un ressort, obtenue par les forces de rappel passives dues aux aimants lors du décalage du corps selon ces premiers axes de liberté) et instables suivant les autres axes de liberté (raideur négative due aux variations d'entrefer des circuits magnétiques constitués par les actionneurs magnétiques eux-mêmes et une partie au moins du corps en mouvement). Une électronique d'asservissement assure activement la stabilité des équilibres selon ces autres axes de liberté, en utilisant pour ce faire des informations sur la position (voire la vitesse) instantanée du corps suspendu pour les convertir en courants qui, en passant dans les bobinage, génèrent les efforts de rappel nécessaires selon ces autres axes.

Les paliers magnétiques sont très couramment utilisés dans le cas de corps tournants. On distingue alors deux grandes catégories de paliers magnétiques :
- les paliers magnétiques axialement actifs dans lesquels des bobinages assurent un centrage actif le long de l'axe de rotation, tandis que le centrage est en pratique passif selon des axes diamétraux. Un exemple en est donné dans le document US-A-4.211.452 précité,
- les paliers magnétiques radialement actifs selon lesquels le centrage selon au moins un axe transversal à l'axe de rotation est assuré par des actionneurs magnétiques, le centrage le long de cet axe de rotation étant en principe assuré passivement par des aimants. Un exemple en est donné dans les documents US-A-4.470.644 et US-A-4.918.345 précités.

Des paliers magnétiques peuvent également être utilisés dans le cas de mouvements linéaires, ainsi que cela ressort du document précité.

Les divers paliers connus nécessitent donc l'implantation de capteurs de position, voire de vitesse, aptes à fournir les signaux d'entrée nécessaires à la boucle d'asservissement actif. Il est donc nécessaire de prévoir un emplacement spécifique pour ceux-ci, ce qui contribue à donner aux paliers connus un encombrement non négligeable. En ce qui concerne les paliers magnétiques pour corps tournants, les capteurs sont décalés le long de l'axe de rotation par rapport aux actionneurs proprement dits, ce qui a comme inconvénient supplémentaire de pouvoir conduire à des erreurs en cas de basculement de l'axe de rotation malgré la raideur gyroscopique ; pour y pallier, on peut prévoir des capteurs de chaque côté, axialement, du plan des actionneurs (d'où une pénalité en poids et en encombrement). Ce même problème se pose, avec plus d'acuité puisqu'il n'y a pas de raideur en basculement s'opposant au basculement, dans le cas d'un palier assurant un centrage actif transversalement à une direction de translation.

En fait, les paliers magnétiques sont généralement choisis pour éviter tout contact physique entre le corps en mouvement et son environnement, c'est pourquoi les capteurs de position ou de vitesse sont eux-mêmes du type sans contact.

L'invention a pour objet un palier magnétique à deux axes radiaux de centrage actif, qui pallie les inconvénients précités, c'est-à-dire dont les actionneurs et les capteurs soient montés en sorte d'assurer un centrage précis, aisé à réaliser, et ce dans un faible encombrement.

L'invention propose à cet effet un palier magnétique pour le centrage magnétiquement actif, selon au moins deux axes radiaux de centrage, d'un second corps B en rotation relative vis-à-vis d'un premier corps A, comprenant :
- au moins un actionneur par axe radial de centrage, chaque actionneur comportant au moins une première portion ferromagnétique portée par le premier corps et dont une portion est entourée par un bobinage de commande , une seconde portion ferromagnétique portée par le second corps et formant, au moins avec la première pièce ferromagnétique, un circuit magnétique dans lequel sont ménagés de premiers entrefers, d'épaisseur variable parallèlement à l'axe de centrage, et un aimant permanent générant un flux dans ce circuit magnétique ;
- des capteurs de vitesse disposés selon des axes radiaux de détection en un nombre au moins égal au nombre desdits axes radiaux de centrage, chaque capteur de vitesse comportant une première partie ferromagnétique portée par le premier corps et dont une portion est entourée par un bobinage de détection, une seconde partie ferromagnétique portée par le second corps et formant, au moins avec la première partie ferromagnétique, une boucle magnétique dans laquelle sont ménagés de seconds entrefers, d'épaisseur variable parallèlement à l'axe de détection, et un aimant permanent générant un flux dans cette boucle magnétique ;
- un circuit d'asservissement appliquant au bobinage de commande un courant de commande en fonction du signal de sortie des capteurs de vitesse ;
ce palier magnétique étant caractérisé en ce que les premiers et seconds entrefers sont sensiblement coplanaires et répartis en alternance autour de l'axe de centrage, le second corps comportant une couronne formant à la fois la seconde portion ferromagnétique des actionneurs et la seconde partie ferromagnétique des capteurs de vitesse.

On appréciera que le centrage est précis, indépendamment d'un éventuel basculement, puisque la détection de vitesse se fait sensiblement dans le même plan transversal que l'application des efforts magnétiques de centrage.

Selon des enseignements préférés :
- deux actionneurs sont prévus pour chaque axe de centrage, disposés symétriquement par rapport à l'axe de rotation. Cela garantit, pour un encombrement donné une meilleure efficacité de centrage ;
- deux capteurs sont prévus pour chaque axe de détection, disposés symétriquement par rapport à l'axe de rotation. Cela conduit à une meilleure précision de détection ;
- les bobinages de commande et de détection sont tous disposés d'un même côté radialement de la couronne du second corps. Cela permet une minimisation de l'encombrement, soit à l'extérieur, soit à l'intérieur de la couronne ;
- les bobinages de commande, d'une part, et les bobinages de détection d'autre part, sont disposés de part et d'autre de ladite couronne du second corps. Cette variante d'implantation permet de répondre aux contraintes spécifiques d'encombrement que l'on peut rencontrer dans certaines applications ;
- les actionneurs et les capteurs comportent chacun en outre une troisième portion ferromagnétique fermant les circuits magnétiques et portée par le premier corps, la couronne portée par le second corps étant formée de deux bagues polaires transversales entre lesquelles est insérée une pluralité annulaire d'aimants permanents à aimantation axiale. Cela permet de répartir le flux de l'aimant entre les première et troisième portions ferromagnétiques, minimisant ainsi les couplages entre raideurs basculante, radiale et axiale ;
- les aimants permanents des actionneurs et des capteurs sont portés par lesdites premières parties ferromagnétiques, des cales statiques étant prévues dans la portion de circuit magnétique reliant les pôles desdits aimants. Cela permet de réaliser un rotor massif en matériau ferromagnétique plus simple que dans la version précitée ;
- les axes de détection forment des angles égaux avec les axes de centrage. Cela permet de réaliser l'identité de sensibilité entre axes de détection ; à titre d'exemple les axes de centrage sont orthogonaux, les axes de détection sont orthogonaux, et les axes de détection forment des angles de 45° avec les axes de centrage ;
- le noyau de chaque capteur est entouré par deux bobinages de compensation montés respectivement avec les bobinages de commande des deux actionneurs entre lesquels ledit capteur est angulairement situé. Cela permet d'assurer un bon découplage de la détection par un capteur vis-à-vis des signaux de commande appliqués aux bobinages de commande des actionneurs qui l'encadrent.

Des objets, caractéristiques et avantages de l'invention ressortent de la description qui suit, donnée à titre d'exemple non limitatif, en regard des dessins annexés sur lesquels :
- la figure 1 est une vue schématique d'un palier magnétique radialement actif conforme à l'invention, selon un premier mode de réalisation,
- la figure 2 en est une vue schématique en coupe selon la ligne brisée II-II de la figure 1,
- la figure 3 est une vue schématique d'une variante de réalisation du palier des figures 1 et 2,
- la figure 4 en est une vue schématique en coupe radiale selon la ligne IV de la figure 3,
- la figure 5 est une vue schématique en coupe radiale selon la ligne V de la figure 3,
- la figure 6 est une vue de principe du montage électrique d'un capteur disposé angulairement entre deux actionneurs,
- la figure 7 est une vue de dessus d'un autre palier conforme à l'invention, selon un second mode de réalisation, et
- la figure 8 en est une vue en coupe selon la ligne brisée VIII-VIII de cette figure 7.

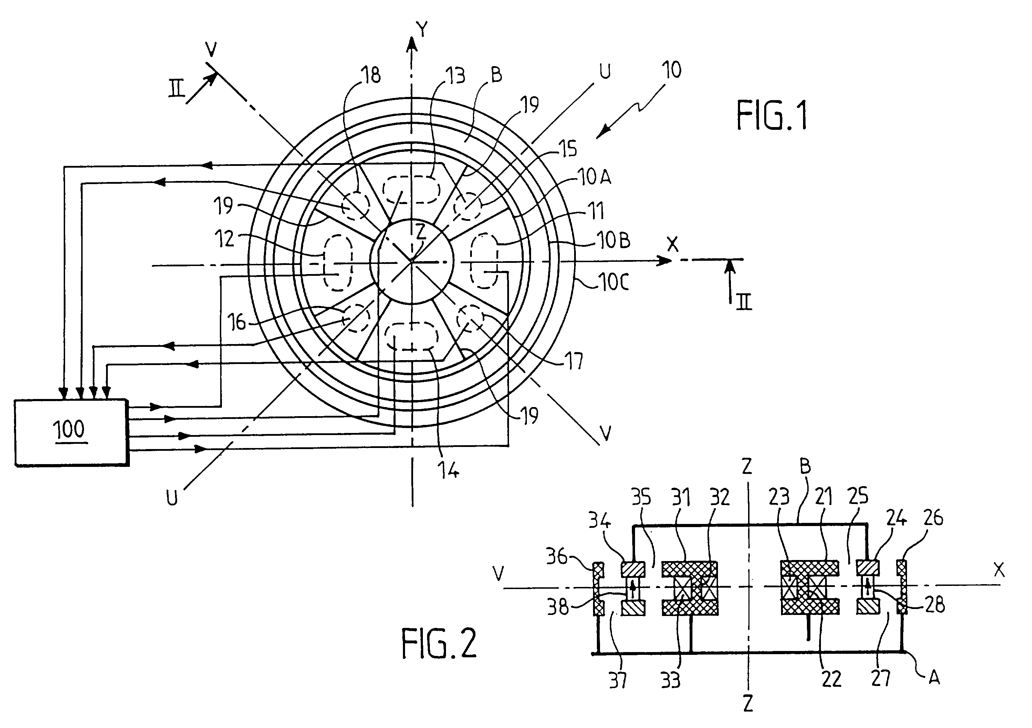

La figure 1 représente, en vue schématique, un palier magnétique pour le centrage magnétiquement actif selon au moins deux axes radiaux de centrage, repérés respectivement X et Y, pour le centrage d'un corps noté B en rotation relative vis-à-vis d'un corps noté A, autour d'un axe de rotation perpendiculaire au plan de la figure et normalement repéré Z. En pratique, le corps B est en rotation par rapport au corps A de sorte que le corps B est appelé généralement rotor tandis que le corps A est appelé stator.

Le palier magnétique 10 comporte essentiellement une partie centrale 10A (comportant en pratique un trou central), une couronne intermédiaire 10B et une couronne extérieure 10C.

Entre la partie centrale et la couronne intermédiaire, d'une part, et entre cette couronne intermédiaire et la couronne extérieure, d'autre part, sont ménagés des entrefers annulaires.

Les axes X et Y sont des axes radiaux de centrage. A cet effet, le palier comporte, pour chaque axe radial de centrage, au moins un actionneur. Dans l'exemple considéré ici, il y a deux actionneurs par axe radial de centrage, respectivement disposés de part et d'autre de l'axe de rotation Z.

Il y a donc deux paires d'actionneurs, ces actionneurs étant repérés 11 et 12 pour l'axe de centrage X, 13 et 14 pour l'axe de centrage Y.

Le palier 10 de la figure 1 admet deux axes de centrage X et Y ; il est bien entendu que ce qui va suivre se généralise aisément au cas où pour une quelconque raison on souhaiterait avoir un plus grand nombre d'axes radiaux de centrage.

Selon une caractéristique essentielle de l'invention, le palier 10 de la figure 1 comporte des capteurs de vitesse disposés sensiblement dans le même plan que les actionneurs 11 à 14, selon une disposition angulairement alternée ; dans le cas représenté, ces capteurs, repérés 15 et 16, 17 et 18 sont disposés, comme les actionneurs, à l'intérieur de la couronne intermédiaire.

La figure 2 représente une coupe du palier 10 de la figure 1 selon la ligne brisée II-II, de sorte que cette figure 2 représente, en partie droite, une coupe d'un actionneur et, en partie gauche, une coupe d'un capteur de vitesse.

Tous les actionneurs ont une même structure.

Ainsi qu'il ressort de la figure 2, chaque actionneur comporte au moins une première portion ferromagnétique portée par le premier corps, ici repérée 21 et dont une portion, généralement appelée noyau 22, est entourée par un bobinage de commande repéré 23. Cet actionneur comporte en outre une seconde portion ferromagnétique repérée 24 portée par le second corps B, c'est-à-dire le rotor, et formant, au moins avec la première portion ferromagnétique 21, un circuit magnétique dans lequel sont ménagés deux premiers entrefers 25 d'épaisseur variable parallèlement à l'axe de centrage considéré, ici l'axe X. Cet actionneur comporte également un aimant permanent 28 générant un flux dans ce circuit magnétique.

Dans l'exemple de ces figures 1 et 2, le circuit magnétique comporte en outre, solidaire de la portion 21, une pièce ferromagnétique de fermeture repérée 26 disposée par rapport à la seconde portion ferromagnétique 24 à l'opposé radialement de la première portion ferromagnétique 21, en étant séparée de cette seconde portion ferromagnétique 24 par une paire d'entrefers 27. Quant à l'aimant 28 précité, il est disposé au sein de la seconde portion ferromagnétique, entre deux pièces polaires transversales à l'axe de rotation Z, de sorte que le flux magnétique généré en permanence par cet aimant selon une direction axiale se partage, selon la position radiale, selon l'axe de centrage, du rotor par rapport au stator, entre la première portion ferromagnétique 21, portant le bobinage de commande, et la portion magnétique extérieure 26.

Chaque capteur de vitesse a une structure sensiblement similaire à celle qui vient d'être décrite à propos des actionneurs.

C'est ainsi que chaque capteur de vitesse comporte une première partie ferromagnétique 31 portée par le premier corps A ou stator et dont une portion, couramment appelée noyau 32, porte un bobinage de détection repéré 33 ; le capteur de vitesse comporte en outre une seconde partie ferromagnétique 34 portée par le rotor et formant, au moins avec la première partie ferromagnétique 31, une boucle magnétique dans laquelle sont ménagés deux seconds entrefers repérés 35. Le capteur de vitesse comporte enfin une troisième pièce ferromagnétique 36 disposée par rapport à la seconde portion ferromagnétique à l'opposé radialement de la première portion ferromagnétique 31. Cette troisième portion ferromagnétique, disposée radialement à l'extérieur, est séparée de la seconde portion ferromagnétique 34 par une paire d'entrefers 37. Un aimant permanent 38 est prévu pour générer un flux dans cette boucle magnétique. Comme pour l'actionneur, cet aimant 38 est ici disposé entre deux parties polaires transversales que comporte la deuxième portion ferromagnétique 34.

Ainsi que cela ressort de la figure 1, les divers capteurs de vitesse, d'une part, et les divers actionneurs, d'autre part, sont connectés à un circuit d'asservissement adapté à appliquer au bobinage de commande des divers actionneurs des courants de commande définis en fonction des signaux de sortie des capteurs de vitesse. Ce circuit d'asservissement, schématisé dans son ensemble par la référence 100, est de structure classique et ne sera pas développé plus avant ici.

On notera sur la figure 2 que les premier et second entrefers que comportent, d'une part les actionneurs et d'autre part les capteurs, sont sensiblement coplanaires et répartis en alternance autour de l'axe de rotation.

Plus précisément, les secondes parties ou portions ferromagnétiques des actionneurs, d'une part, et des capteurs de vitesse, d'autre part, sont constituées par une même couronne, c'est-à-dire la couronne intermédiaire 10B de la figure 1, comportant deux bagues polaires entre lesquelles sont enserrés une série annulaire d'aimants permanents à aimantation axiale. Les entrefers disposés de part et d'autre de chacune de ces bagues annulaires formant pièces polaires sont en effet coplanaires au sein des actionneurs d'une part et au sein des capteurs de vitesse d'autre part, selon deux plans légèrement décalés axialement, définis par les plans desdites bagues polaires.

Les lignes radiales 19 de la figure 1 schématisent des fentes radiales qui s'étendent depuis l'entrefer interne en direction du trou central (sans nécessairement aller jusqu'à celui-ci), entre les bobinages, en sorte d'éviter de court-circuiter le flux magnétique du bobinage d'un actionneur par les noyaux des détecteurs voisins et réciproquement.

De manière préférée, les axes de détection, c'est-à-dire les directions radiales repérées U et V coplanaires aux axes X et Y et selon lesquelles les capteurs de vitesse détectent des mouvements, font des angles égaux avec les axes de centrage entre lesquels sont disposés lesdits axes de détection. Comme il a été indiqué plus haut, le palier 10 des figures 1 et 2 comporte deux axes radiaux de centrage, et comme ceux-ci sont disposés à angle droit, il en découle que les axes de détection sont disposés eux-mêmes à angle droit, en formant chacun un angle de 45° avec chacun des deux axes radiaux de centrage.

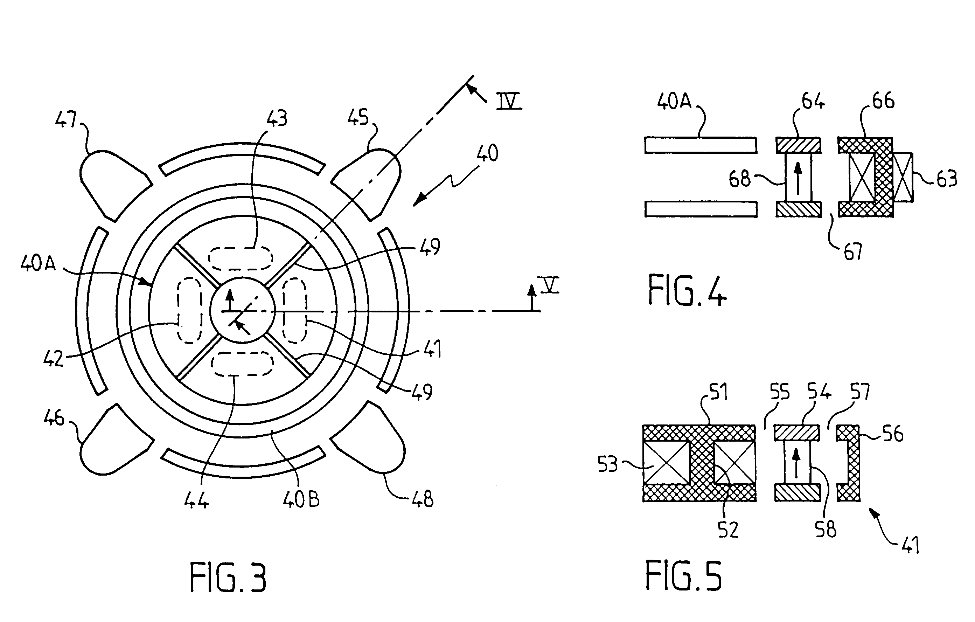

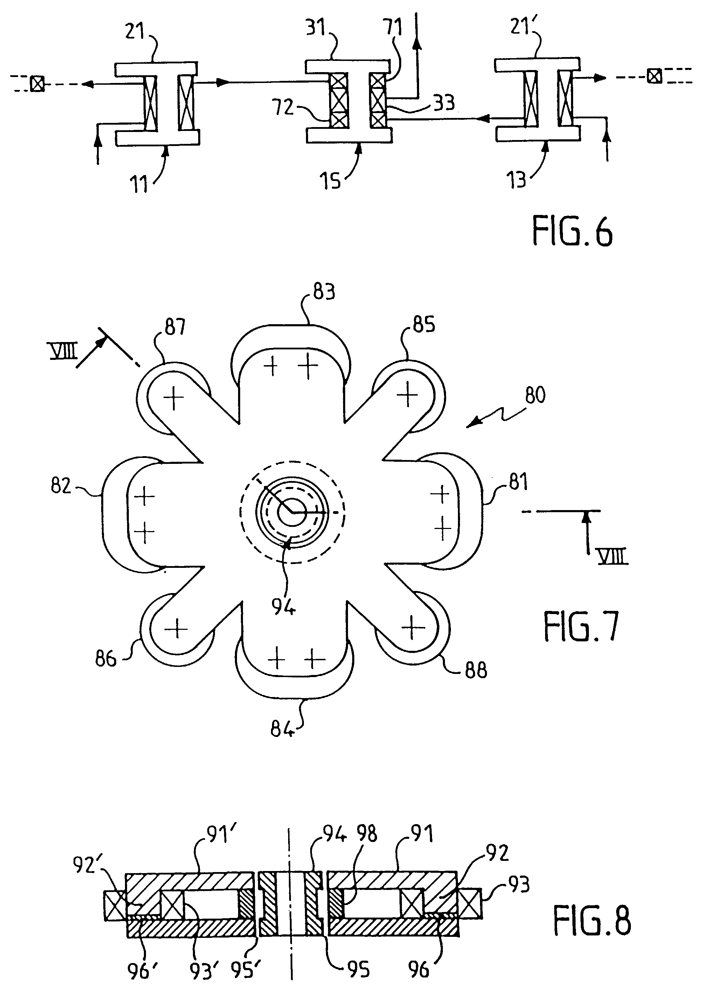

La figure 3, complétée par les figures 4 et 5, décrit une variante de réalisation du palier 10 des figures 1 et 2, dont elle se distingue par le fait que les bobinages des capteurs de vitesse sont cette fois-ci disposés radialement à l'extérieur de la couronne intermédiaire.

C'est ainsi que, sur ce palier 40 de cette figure 3, on constate la présence de deux actionneurs 41 et 42 pour l'axe X , de deux actionneurs 43 et 44 pour l'axe Y, de même structure que celle représentée dans la partie droite de la figure 2. Ces actionneurs sont représentés plus en détail par la figure 5 où est représenté à titre d'exemple l'actionneur 41.

Cet actionneur 41 comporte une première pièce ferromagnétique 51 portée par le stator et dont une partie appelée noyau 52 est entourée par un bobinage de commande 53. Cet actionneur comporte en outre, portée par le rotor, une seconde portion ferromagnétique 54, formée de deux pièces polaires entre lesquelles est interposé un aimant permanent à aimantation axiale repéré 58. Entre cette première pièce ferromagnétique statorique et cette seconde partie ferromagnétique rotorique sont ménagés deux entrefers 55. A l'extérieur radialement de la seconde portion ferromagnétique 54 est disposée une troisième portion ferromagnétique 56, elle-aussi statorique, séparée de cette seconde portion ferromagnétique par une paire d'entrefers 57.

Les références 49 désignent des fentes radiales séparant angulairement les premières portions ferromagnétiques d'actionneurs voisins pour éviter l'apparition de court-circuits magnétiques entre eux ; ces fentes sont ici parallèles aux axes de détection.

Ainsi qu'il ressort par contre de la figure 4, les capteurs de vitesse repérés 45 et 46, 47 et 48 à la figure 3 comportent chacun une pièce ferromagnétique radialement externe 66, portée par le stator, et une seconde portion ferromagnétique, rotorique, repérée 64, séparée de cette première pièce 66 par une paire d'entrefers repérée 67. Cette seconde portion ferromagnétique 64 est formée de deux pièces polaires décalées axialement dont les tranches définissent lesdits entrefers et entre lesquelles est disposé un aimant permanent 68. A gauche de cette seconde portion ferromagnétique de la figure 4 sont représentées les tranches radiales de deux pièces parallèles sans contact entre elles ; à savoir des pièces polaires 51 des actionneurs. En pratique, le flux de l'aimant continue à se partager entre la première portion ferromagnétique et donc au travers du bobinage de détection 63, d'une part, et d'autre part au travers de l'actionneur 41 et/ou 43.

Dans le palier de la figure 3, les secondes portions ferromagnétiques rotoriques 54 et 64 des actionneurs, d'une part, et des capteurs de vitesse, d'autre part, sont, comme dans le cas des figures 1 et 2, constituées par une seule et même couronne intermédiaire 40B. Par contre, les premières portions ferromagnétiques des capteurs de vitesse sont disposées en des zones où est interrompue la couronne extérieure par laquelle se referme le circuit magnétique des actionneurs ; ces interruptions servent en pratique à éviter les court-circuits magnétiques entre capteurs.

On comprend aisément que, compte tenu de la connaissance préalable de l'orientation des axes de détection par rapport aux axes de centrage, il est très facile, à partir des signaux de mesure selon les deux axes de détection, de détecter par addition ou soustraction les valeurs des vitesses correspondant aux axes de centrage. Ce calcul peut bien entendu se faire soit après identification des valeurs des vitesses, soit par simple addition ou soustraction des tensions des signaux générés dans les bobinages de commande selon les axes de détection, du fait des mouvements transversaux du rotor par rapport au stator.

En pratique, il peut arriver des cas où les tensions détectées aux bornes des bobines de détection contiennent, en plus de l'information de vitesse radiale du rotor le long de l'axe de détection concerné, une partie proportionnelle à la dérivée des courants de commande appliqués selon les axes de centrage entre lesquels se trouve le capteur de vitesse considéré. En effet, une partie du flux magnétique des actionneurs peut, en circulant circonférentiellement par les pièces polaires de la partie ferromagnétique rotorique, passer dans les bobines capteur, et modifier en conséquence le signal correspondant à la mesure de vitesse. Ce couplage de la tension d'entrée de l'asservissement au courant de commande peut engendrer une instabilité de l'asservissement du rotor. Il est alors souhaitable de limiter ce couplage entre actionneurs et capteurs. Cela peut aisément s'obtenir, au moyen d'enroulements dits de compensation (voir la figure 6), montés en série avec les bobinages de commande de l'un et/ou l'autre des actionneurs entre lesquels le capteur de vitesse considéré se trouve angulairement situé.

Cette figure de principe 6 représente de manière schématique la première partie ferromagnétique 31 d'un capteur, par exemple le capteur de vitesse 15, et celles 21 et 21' des deux actionneurs entre lesquels il est situé, c'est-à-dire, lorsque l'on se réfère à la figure 1, les actionneurs 11 et 13.

On observe que, autour de la portion formant noyau de la première partie ferromagnétique de ce capteur 15, sont enroulés, non seulement le bobinage de détection tel que celui repéré 33 à la figure 2, mais aussi un bobinage de compensation 71, monté en série avec le bobinage de commande de la première partie ferromagnétique de l'actionneur repéré 11 ainsi qu'un bobinage de compensation 72, monté en série avec le bobinage de commande de la première partie ferromagnétique de l'actionneur repéré 13.

Comme cela ressort de la figure 6, pour tenir compte de ce que chaque actionneur est disposé entre deux capteurs de vitesse, à chaque bobinage de commande sont connectés en série deux bobinages de compensation portés respectivement par lesdits capteurs. A titre d'exemple, les bobinages de commande comportent 380 spires, et les bobinages de compensation comportent 50 spires.

D'autres variantes se déduisent aisément des figures 1 et 2 d'une part, et des figures 3 et 4 d'autre part. L'une de ces variantes, non représentée, consiste à prévoir tous les bobinages à l'extérieur de la couronne rotorique (cela revient à intervertir les parties ferromagnétiques statoriques de chacune des parties droite et gauche de la figure 2). Une autre variante consiste à disposer les bobinages de commande à l'extérieur de la couronne rotorique : cela revient à intervertir les parties ferromagnétiques statoriques de la figure 4 d'une part, et de la figure 5 d'autre part.

Ce qui vient d'être dit à propos des figures 1 à 6 correspond à une adaptation d'un palier conforme au document US-A-4.470.644 précité.

L'invention se généralise aisément au cas d'un palier conforme au brevet US-A-4.918.345 également précité.

Les figures 7 et 8 montrent ainsi un palier 80 dont aussi bien les actionneurs 81 à 84 que les capteurs de vitesse 85 à 88, qui alternent angulairement, sont constitués de deux pièces définissant à elles seules le circuit magnétique de l'actionneur/capteur.

Une portion 92 de la partie statorique 91 de chaque actionneur constitue le noyau d'un bobinage de commande 93 entre deux portions polaires entre lesquelles est par ailleurs inséré un aimant permanent 98 à aimantation axiale. La partie rotorique 94 est « nue » en ce sens qu'elle ne sert qu'à refermer le flux au travers des entrefers d'épaisseur variable 95, 95'. Il y a avantageusement une cale statique 96 dans le circuit magnétique reliant les pôles des aimants afin de ne pas "court-circuiter" l'aimant dans les actionneurs et capteurs.

Les capteurs sont de structure similaire. Les références sont les mêmes que pour les actionneurs, avec l'addition de l'indice "prime".

A la figure 7, les bobinages de commande 93 ou de détection 93' sont tous disposés radialement à l'extérieur. Une variante non représentée consiste bien sûr à disposer tous ces bobinages à l'intérieur radialement de la partie rotorique. Il y a avantageusement la mise en oeuvre de bobinages de compensation comme dans la figure 6. On constate ici aussi l'existence dans les pièces ferromagnétiques d'entailles ou fentes évitant les court-circuits entre actionneurs et détecteurs.

On appréciera que dans tous les exemples représentés, les tranches de la portion rotorique qui participent à la détermination des entrefers des boucles magnétiques des actionneurs, participent en outre à la détermination des entrefers des boucles magnétiques des capteurs, ce qui contribue à la fois à la compacité, à la précision et au faible coût.

Par ailleurs, et ceci est valable pour toutes les versions du palier évoquées plus haut, le fait de mesurer à l'aide des bobinages des capteurs la position et/ou la vitesse de la pièce rotorique commandée par l'actionneur permet de supprimer, lorsqu'il y a rotation du rotor, d'éventuelles vibrations générées par un palier classique commandé par capteurs séparés. En effet, les capteurs séparés détectent la position du centre de la piste "lue" par ces capteurs, et ce centre n'est pas forcément concentrique avec celui de la couronne rotorique du palier d'où apparition d'une perturbation.

Le palier objet du brevet permet de supprimer totalement ce défaut en réalisant l'identité du centre de détection avec le centre de l'actionneur.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Palier magnétique pour le centrage magnétiquement actif, selon au moins deux axes radiaux de centrage, d'un second corps (B) en rotation relative vis-à-vis d'un premier corps (A), comprenant :
- au moins un actionneur (11-15, 41-45, 81-85) par axe radial de centrage, chaque actionneur comportant au moins une première portion ferromagnétique (21, 51, 91) portée par le premier corps et dont une portion est entourée par un bobinage de commande (23, 53, 93), une seconde portion ferromagnétique (24, 54, 94) portée par le second corps et formant, au moins avec la première pièce ferromagnétique, un circuit magnétique dans lequel sont ménagés de premiers entrefers (25, 55, 95), d'épaisseur variable parallèlement à l'axe de centrage, et un aimant permanent générant un flux dans ce circuit magnétique ;
- des capteurs de vitesse (16-18, 46-48, 86-88) disposés selon des axes radiaux de détection en un nombre au moins égal au nombre desdits axes radiaux de centrage, chaque capteur de vitesse comportant une première partie ferromagnétique (31, 66, 91') portée par le premier corps et dont une portion est entourée par un bobinage de détection (33, 63, 93'), une seconde partie ferromagnétique (34, 64, 94') portée par le second corps et formant, au moins avec la première partie ferromagnétique, une boucle magnétique dans laquelle sont ménagés de seconds entrefers (35, 67, 95') , d'épaisseur variable transversalement à l'axe de rotation, et un aimant permanent générant un flux dans cette boucle magnétique ;
- un circuit d'asservissement appliquant au bobinage de commande (14) un courant de commande (I) en fonction du signal de sortie des capteurs de vitesse ;
ce palier magnétique étant caractérisé en ce que les premiers et seconds entrefers (25, 35, 55, 67, 95, 95') sont sensiblement coplanaires et répartis en alternance autour de l'axe de centrage, le second corps comportant une couronne (10B, 40B, 94) formant à la fois la seconde portion ferromagnétique des actionneurs et la seconde partie ferromagnétique des capteurs de vitesse.

2. Palier magnétique selon la revendication 1, caractérisé en ce que deux actionneurs sont prévus pour chaque axe de centrage, disposés symétriquement par rapport à l'axe de rotation.

3. Palier magnétique selon la revendication 1 ou la revendication 2, caractérisé en ce que deux capteurs sont prévus pour chaque axe de détection, disposés symétriquement par rapport à l'axe de rotation.

4. Palier magnétique selon l'une quelconque des revendications 1 à 3, caractérisé en ce que les bobinages de commande et de détection sont tous disposés d'un même côté radialement de la couronne du second corps.

5. Palier magnétique selon l'une quelconque des revendications 1 à 4, caractérisé en ce que les bobinages de commande, d'une part, et les bobinages de détection d'autre part, sont disposés de part et d'autre de ladite couronne du second corps.

6. Palier magnétique selon l'une quelconque des revendications 1 à 4, caractérisé en ce que les actionneurs et les capteurs comportent chacun en outre une troisième portion ferromagnétique fermant les circuits magnétiques et portée par le premier corps, la couronne portée par le second corps étant formée de deux bagues polaires transversales entre lesquelles est insérée une pluralité annulaire d'aimants permanents à aimantation axiale.

7. Palier magnétique selon l'une quelconque des revendications 1 à 3, caractérisé en ce que les aimants permanents des actionneurs et des capteurs sont portés par lesdites premières parties ferromagnétiques, des cales statiques étant prévues dans la portion de circuit magnétique reliant les pôles desdits aimants.

8. Palier magnétique selon l'une quelconque des revendications 1 à 7, caractérisé en ce que les axes de détection forment des angles égaux avec les axes de centrage.

9. Palier magnétique selon la revendication 8, caractérisé en ce que les axes de centrage sont orthogonaux, les axes de détection sont orthogonaux, et les axes de détection forment des angles de 45° avec les axes de centrage.

10. Palier magnétique selon l'une quelconque des revendications 1 à 9 , caractérisé en ce que le noyau de chaque capteur est entouré par deux bobinages de compensation montés respectivement avec les bobinages de commande des deux actionneurs entre lesquels ledit capteur est angulairement situé.
